# NEUE EUROPÄISCHE PATENTSCHRIFT

(11) **EP 0 126 409 B2**
(45) Veröffentlichungstag und Bekanntmachung des Hinweises auf die Entscheidung über den Einspruch: **18.08.1993**
(45) Hinweis auf die Patenterteilung: 23.09.1987
(21) Anmeldenummer: 84105488.5
(22) Anmeldetag: 15.05.1984
(51) Int. Cl.: E21B 10/44

(54) **Bohrwerkzeug**
Boring tool
Outil de forage

(30) Priorität: 18.05.1983 DE 3317989
(43) Veröffentlichungstag der Anmeldung: 28.11.1984
(73) Patentinhaber: Hawera Probst GmbH + Co., 88212 Ravensburg (DE)
(72) Erfinder: Peetz, Wolfgang, Dipl.-Ing., D-7981 Blitzenreute (DE); Klaissle, Siegfried, D-7981 Schlier/Unterankenreute (DE); Moser, Bernhard, D-7963 Altshausen (DE); Haussmann, August, D-7980 Ravensburg-Oberzell (DE)
(74) Vertreter: Patentanwälte Eisele, Otten & Roth

(56) Entgegenhaltungen:
- DD-A- 147 785
- DE-B- 1 459 866
- DE-C- 333 896
- DE-C- 2 358 447
- FR-A- 1 302 191
- JP-B- 5 711 996
- STOCK, "Werkzeuge für die Bearbeitung von Leichtmetallen), 1939, Berlin, Seiten 1-39
- TECHNICA, No. 6, "Herstellung der Wendelbohrer", 1976, Seiten 339-344
- Beitrag Dipl. Ing. Roland Hecker: "Stoss-und Schlagprobleme beim schlagenden Bohren",Fortschrittberichte der VDI-Zeitschriften, Reihe 11 Nr. 52 (1983)
- VDI-Zeitschrift 125 (1983) Nr. 7 - April (I), Seite 264 und Auszug Veröffentlichung von Herrn Dr. R.Hecker, Seiten 33,34,35

## Beschreibung

Die Erfindung betrifft ein Bohrwerkzeug, vorzugsweise zum Einsatz in Bohrhämmern, nach dem Oberbegriff des Anspruches 1.

Bei einem bekannten Bohrwerkzeug verläuft die zur Abfuhr des Bohrmehles vorgesehene Abfuhrnut über ihre ganze Länge mit konstanter Steigung. Bei Verwendung in einem Bohrhammer werden den Drehbewegungen des Bohrwerkzeuges axiale Schläge überlagert, die auf das Einspannende des Bohrwerkzeuges wirken. Durch diese Schlagimpulse treten im Bohrwerkzeug Longitudinelaschwingungen auf. Die durch die fortlaufende Impulsbeaufschlagung entstehende Stoßwellenfront wird an Querschnittssprüngen des Bohrwerkzeuges zum Teil reflektiert. Die Querschnittssprünge des Bohrwerkzeuges ergeben sich aufgrund der Abfuhrnut, in deren Bereich das Bohrwerkzeug verringerten Querschnitt aufweist. Da die Abfuhrnut des bekannten Bohrwerkzeuges mit konstanter Steigung verläuft, sind die Querschnittssprünge in gleichem Abstand längs des Bohrwerkzeuges angeordnet. Dadurch wird die Stoßwellenfront an jedem Querschnittssprung kontinuierlich teilweise reflektiert. Diese Kontinuität hat aber Auswirkungen auf die für den Schall mitverantwortlichen Querschwingungen, die letztendlich auch durch die Schlagimpulse angeregt und durch die teilweise reflektierten Impulse verstärkt werden können. Infolge der in gleichen Abständen angeordneten Querschnittssprünge können sogar Resonanzschwingungen auftreten, durch die das Bohrwerkzeug sehr hoch belastet und unter Umständen beschädigt wird. Die durch die teilweise reflektierten Impulse verstärkten Querschwingungen führen zu einer erheblichen Lärmentwicklung. Außerdem wird die Bohrleistung des Bohrwerkzeuges infolge der teilweise stetigen Reflektion der Longitudinalschwingungen herabgesetzt.

Aus der JP-A-57-11996 ist ein Bohrwerkzeug für die Gesteinsbearbeitung gemäß der Gattung des Anspruchs 1 bekannt geworden. Dabei soll ein Abbau der konzentrierten Belastungen im Bohrerkopf sowie im Schaftendebereich erzielt werden, um ein Brechen des Bohrers in diesen Bereichen zu vermeiden. Dabei geht die Lehre dieser Druckschrift davon aus, daß bei üblichen Bohrwerkzeugen im Bereich des Bohrerkopfes sowie des Schaftendes ein hoher Querschnittssprung im Kerndurchmesser eintritt, der zu einer erhöhten Kerbspannungsbelastung führt. Um dies zu vermeiden, wird der Kerndurchmesser im Bereich des Bohrkopfes sowie im Bereich des Schaftendes zunächst nur geringfügig geändert, was mit einer geringeren Wendelsteigung erzielt wird. Der Kernquerschnitt des Bohrwerkzeugs dieser bekannten Druckschrift weist deshalb im Bereich des Bohrkopfes sowie des Schaftendes jeweils seinen größten Wert und in der Schaftmitte einen kleinsten Wert auf. Hierdurch sollen die Querschnittssprünge im Kopf-und im Schaftendebereich auf ein Minimum reduziert werden.

Aus der weiterhin bekannten DE-C-23 58 447 ist ein Gesteinsbohrer bekannt geworden, dessen Nutenbreite der Bohrmehlnut sich über die Länge des Bohrschaftes in Richtung zum Einspannende hin stetig vergrößert. Dabei geschieht diese Vergrößerung in kleinem Rahmen auf Kosten einer Abnahme der Rückenbreite der Führungsstege. Der Steigungswinkel der Bohrmehlnut selbst kann dabei konstant beibehalten werden.

Die beiden oben genannten Schriften beschäftigen sich nicht mit der Frage von Schwingungen innerhalb des Bohrwerkzeugs aufgrund einwirkender Schlagimpulse. Eine entsprechende Lehre hieraus kann nicht abgeleitet werden.

Aus einer weiterhin bekannten Veröffentlichung Dr. Hecker, vom 20.04.1982, Seite 33 - 35 sind Versuchsergebnisse über die Schallabstrahlung bei Bohrwerkzeugen bekannt geworden. Dabei ist ausgeführt, daß eine starke Wechselwirkung zwischen den verschiedenen Schwingungen und der Schallabstrahlung im Zusammenhang mit der Wendelausbildung steht. Insbesondere vermittelt diese Druckschrift den Hinweis, ein Werkzeug möglichst symmetrisch aufzubauen, wie dies in erster Linie durch ein Mehrfachwendelwerkzeug erzielt wird. Dabei wird jeder Wendelausbildung insgesamt ein negativer Einfluß auf die Schallabstrahlung bescheinigt, da die Querschnittsübergänge eine zusätzliche Abstrahlfläche für die Dehnungsschwingungen sind.

Der Erfindung liegt die Aufgabe zugrunde, ein solches Bohrwerkzeug so auszubilden, daß die Energie des Schlagimpulses so im Bohrwerkzeug verteilt wird, daß es eine höhere Zerspanenergie bei Abnahme der Schallenergie erhält.

Diese Aufgabe wird erfindungsgemäß mit dem kennzeichnenden Merkmal des Anspruches 1 gelöst.

Beim erfindungsgemäßen Bohrwerkzeug verläuft die Abfuhrnut nicht mehr mit konstanter Steigung über ihre ganze Länge. Sie hat vielmehr im Bereich des Bohrkopfes ihre geringste Steigung, die zum Einspannende hin zunimmt. Dadurch treten keine in gleichen Abständen liegende Querschnittssprünge am Bohrwerkzeug mehr auf, da entsprechend der unterschiedlichen Steigung der Abfuhrnut die Querschnittsschwächungen bzw. -verstärkungen in ungleichen Abständen längs des Bohrwerkzeuges vorgesehen sind. Die Querschwingungen werden infolge der unregelmäßig angeordneten Querschnittssprünge nicht mehr durch die teilweise stetigen oder kontinuierlich reflektierten Impulse verstärkt, wodurch eine erhebliche Schallreduzierung erreicht wird. Die Querschwingungen können infolge dererfindungsgemäßen Ausbildung nicht in Resonanz fallen, so daß eine Beschädigung des Bohrwerkzeuges infolge solcher Resonanzschwingungen ausgeschlossen ist. Da die an den Querschnittssprüngen teilweise reflektierten Impulse die Querschwingungen nicht mehr verstärken, wird außer der erheblichen Schallreduzierung eine wesentlich höhere Borhleistung erzielt, die im Vergleich zu den bekannten Bohrwerkzeugen bis zu 65 % besser ist.

Weitere Merkmale der Erfindung ergeben sich aus den weiteren Ansprüchen

Die Erfindung wird anhand einiger in den Zeichnungen dargestelterAusführungsbeispiele: näher erläutert. Es zeigen:
Fig. 1 in Ansicht ein erfindungsgemäßes Bohrwerkzeug,
Fig. 2 einen Schnitt durch das Bohrwerkzeug gemäß Fig.1,
Fig. 3 und 4 zwei weitere Ausführungsformen von Bohrwerkzeugen in Ansicht.
Fig. 5 in Darstellung entsprechend Fig. 1 eine weitere Ausführungsform eines Bohrwerkzeugs.
Fig. 6 und 7 in Darstellungen entsprechend Fig. 2 weitere Ausführungen von Bohrwerkzeugen.

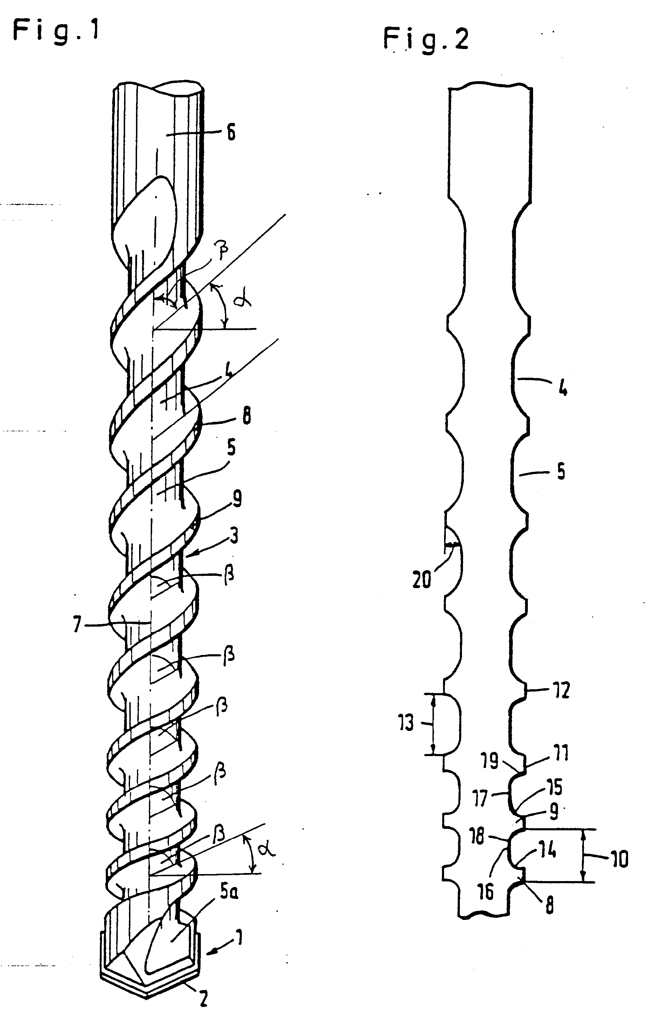

Das Bohrwerkzeug ist zum vorzugsweisen Einsatz in Bohrhämmer vorgesehen und dient zum Bearbeiten von Beton, Gestein und verwandten Materialien. Es hat einen Bohrkopf 1, der mit einem Schneidelement 2 versehen ist. Es besteht vorzugsweise aus Hartmetall, kann aber auch aus anderen geeigneten Materialien bestehen. Es können auch mehrere Schneidelemente am Bohrkopf vorgesehen sein. Schließlich kann der Bohrkopf 1 auch vollständig aus Hartmetall oder einem anderen Material ohne Schneidelemente bestehen. An den Bohrkopf 1 schließt ein Schaftteil 3 an, in dem im dargestellten Ausführungsbeispiel zwei wendelförmige Abfuhrnuten 4 und 5 vorgesehen sind, die sich vom Bohrkopf 1 aus bis zu einem Einspannende 6 erstrecken. In den Abfuhrnuten 4 und 5 wird das beim Bohren entstehende Bohrmehlnut vom Bohrkopf 1 in Richtung auf das Einspannende 6 transportiert. Das Bohrwerkzeug wird mit dem Einspannende 6 in eine Antriebsvorrichtung eingespannt, mit der das Bohrwerkzeug drehend angetrieben wird. Bei Verwendung eines Bohrhammers als Antriebsvorrichtung werden den Drehbewegungen des Bohrwerkzeuges Axialschläge überlagert. An die Abfuhrnuten 4, schließen Zuführnuten 5a an, von denen in Fig. 1 nur die eine Zufuhrnut zu erkennen ist. Die Zuführnuten verlaufen vom Schneidenbereich aus verhältnismäßig steil und gehen in die im Ausführungsbeispiel flacher ansteigenden Abfuhrnuten über.

Die Abfuhrnuten 4, 5 haben am Bohrkopf 1 ihre geringste Steigung, das heißt der Steigungswinkel a derAbfuhrnuten ist verhältnismäßig klein (Fig. 1). Der Komplementärwinkel zu 90°, Winkel ß wird zur Achse 7 des Bohrwerkzeuges gemessen. Die Steigung der Abfuhrnuten 4, 5 nimmt vom Bohrkopf 1 aus zu, wie die in Richtung auf das Einspannende 6 zu nehmenden Steigungswinkel a in Fig. 1 zeigen. Da die Abfuhrnuten 4, 5 im Bereich des Bohrkopfes 1 ihre geringste Steigung haben, erhält das Bohrwerkzeug während des Bohrens an der Bohrungswandung eine im Vergleich zu den herkömmlichen Bohrwerkzeugen wesentlich bessere Abstützung. Die die Abfuhrnuten begrenzenden, ebenfalls wendelförmig verlaufenden Stege 8 und 9 haben infolge derflachen Steigung der Abfuhrnuten im Bereich des Bohrkopfes in Achsrichtung des Bohrwerkzeuges nur verhältnismäßig geringen Abstand 10, so daß das Bohrwerkzeug in diesem Bereich optimal an der Bohrungswandung abgestützt werden kann. Die Stege 8, 9 haben achsparallele Rückenflächen 11, 12, die auf einem gemeinsamen, gedachten Zylindermantel liegen. Infolge der geringen Steigung der Abfuhrnuten 4, 5 am Bohrkopf 1 liegen die Rückenflächen 11, 12 in Axialrichtung mit entsprechend geringem Abstand voneinander, so daß eine großflächige Abstützung des Bohrwerkzeuges im kritischen Bereich des Bohrkopfes 1 erzielt wird. Infolge der geringen Achsabstände der Rückenflächen 11, 12 voneinander wird die Achsflucht der Bohrung ebenfalls günstig beeinflußt. Außerdem kann der Bohrkopf 1 infolge der geringen Steigung sehr kurz ausgebildet werden, so daß das beim Bohren anfallende Bohrmehl möglichst schnell von den Abfuhrnuten 4, 5 aufgenommen und vom Bohrkopf weggefördert wird.

Da die Steigung der Abfuhrnuten 4, 5 vom Bohrlopf 1 aus zunimmt, wird das Bohrmehl mit zunehmendem Abstand vom Bohrlopf 1 rascher in Axialrichtung des Bohrwerkzeuges transportiert. Dadurch ist sichergestellt, daß im Bereich des Bohrkopfes im Bohrloch keine Verstopfung auftritt. Infolge der zunehmenden Steigung der Abfuhrnuten 4, 5 wird vorzugsweise im mittleren Bereich des Schaftes 3 sowie im Bereich des Einspannendes 6 eine verhältnismäßig große Steigung erreicht, die sich vorteilhaft auf die Biegesteifigkeit des Bohrwerkzeuges auswirkt. Dadurch wird gerade der beim Bohren kritische mittlere Teil des Bohrwerkzeuges durch die große Steigung der Abfuhrnuten 4, 5 gegen Biegung versteift, so daß die Bruchgefahr während des Bohrens, insbesondere beim Bohren von tiefen Löchern, erheblich verringert wird.

Die Rückenflächen 11, 12 haben über die Länge der Stege 8, 9 annährend konstante Breite. In Verbindung mit der zunehmenden Steigung derAbfuhrnuten 4, 5 wird dadurch erreicht, daß die axiale Breite 13 der Abfuhrnuten 4, 5 in Richtung auf das Einspannende 6 hin vergrößert wird. Dadurch wird, ohne daß die Abfuhrnuten 4, 5 in der Tiefe vergrößert werden, das Nutvolumen vergrößert, so daß entsprechend große Mengen an Bohrmehl zuverlässig vom Bohrkopf 1 aus gefördert werden können. Schließlich werden durch die zunehmende Steigung der Abfuhrnuten 4, 5 und dem zunehmenden axialen Abstand - benachbarter Stege 8, 9 voneinander die Reibflächen des Bohrwerkzeuges an der Bohrlochwand verringert, die durch die Rückenflächen 11, 12 der Stege gebildet werden. Die Wandreibung im Bohrloch ist dadurch gering, so daß die Antriebsvorrichtung nicht hoch belastet und beansprucht wird.

Es ist dadurch möglich, ohne Verringerung der Bohrleistung antriebsschwächere Antriebsvorrichtungen einzusetzen. Mit dem Bohrwerkzeug wird also sichergestellt, daß einerseits im Bereich des Bohrkopfes infolge der geringen Steigung der Abfuhrnuten 4, 5 eine zuverlässige Abstützung an der Bohrungswandung sowie ein rascher Abtransport des anfallenden Bohrmehles erreicht wird, daß andererseits die Reibflächen des Bohrwerkzeuges an der Bohrungswandung verringert und das Nutvolumen in Richtung auf das Einspannende 6 vergrößert werden.

Im Ausfürungsbeispiel nach den Figuren 1 und 2 nimmt die Steigung der Abfuhrnuten 4, 5 bis zum Einspannende 6 hin zu. Dadurch nimmt das Nutvolumen der Abfuhrnuten 4, 5 über die ganze Länge des Bohrwerkzeuges zu, und die Wandreibung über die Rückenflächen 11, 12 der Stege 8, 9 wird optimal verringert.

Damit die beschriebenen Wirkungen gleichmäßig über die ganze Länge des Bohrwerkzeuges auftreten, nimmt die Steigung der Abfuhrnuten 4, 5 vorzugsweise stetig in Richtung auf das Einspannende 6 zu. Dadurch ergeben sich auch herstellungstechnische Vorteile.

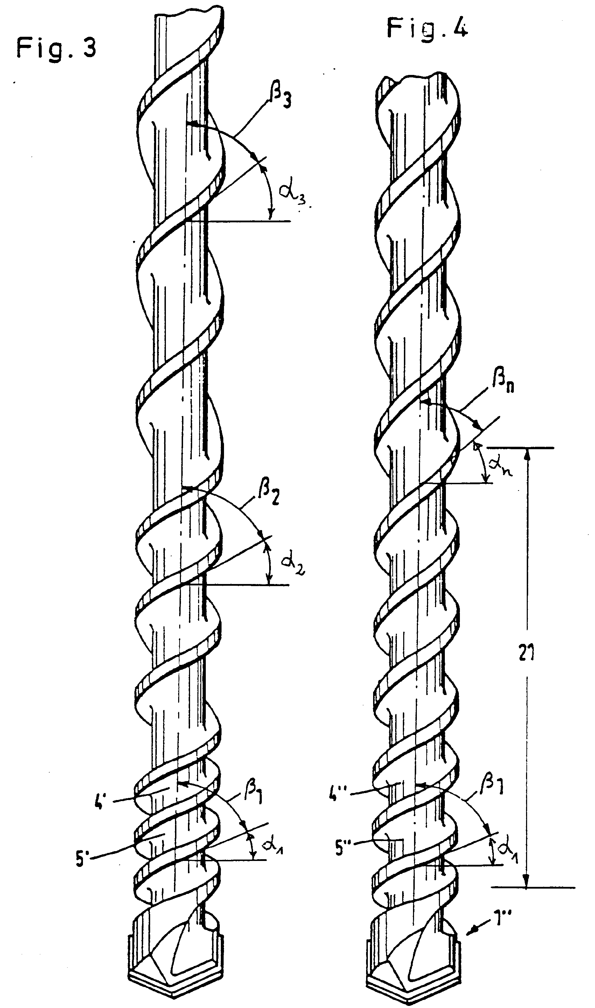

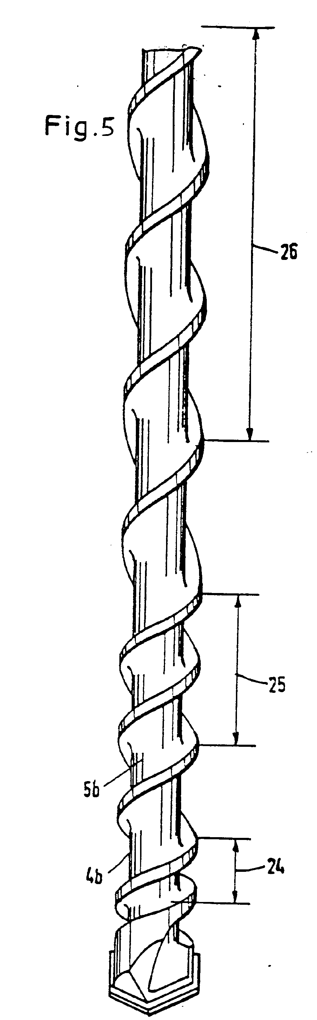

Es ist aber auch möglich, daß die Steigung der Abfuhrnuten vom Bohrkopf 1 aus in Richtung auf das Einspannende 6 abschnittsweise zunimmt (Fig. 3). In diesem Falle können die Abfuhrnuten 4', 5' beispielsweise über zwei Gänge konstante Steigung haben, ehe die Steigung wieder zunimmt. Auf diese Weise kann die Steigungszunahme derAbfuhrnuten 4,5 beispielsweise nach jeweils zwei Gängen erfolgen, so daß innerhalb der beiden Gänge die Steigung jeweils konstant ist. Wie Fig. 3 zeigt, nimmt nach jeweils zwei Gängen der Abfuhrnuten 4', 5' der Steigungswinkel _{U1}, a₂, a₃ zu, während er innerhalb dieser Gänge jeweils konstant bleibt. Das Bohrwerkzeug kann dadurch an den jeweiligen Verwendungszweck angepaßt werden. Auch kann die abschnittsweise Zunahme der Steigung in Richtung auf das Einspannende 6 stetig zunehemend sein, indem beispielsweise nacheinander die Steigung der Abfuhrnuten 4b, 5b über zwei, drei, vier und fünf Gänge 24 bis 26 (Fig. 5) jeweils konstant ist und von einem Abschnitt zum anderen zunimmt. Die Zunahme der Abfuhrnuten-Steigung kann somit variabel gestaltet werden. In allen Fällen ist aber die kleinste Steigung der Abfuhrnuten im Bereich des Bohrkopfes 1 vorgesehen, um dort die beschriebenen Wirkungen zu erreichen.

Wie Fig. 2 zeigt, weist das Bohrwerkzeug infolge der Abfuhrnuten 4, 5 Querschnittssprünge auf. Wenn während des Bohrens auf das Bohrwerkzeug die Axialschläge ausgeübt werden, treten infolge dieses Schlagimpulses im Bohrwerkzeug Longitudinalschwingungen auf. Die Stoßwellenfront der Longitudinalschwingungen wird an diesen Querschnittssprüngen zum Teil reflektiert. Durch den Schlagimpuls werden auch Querschwingungen im Bohrwerkzeug angeregt, die jedoch durch die an den Querschnittssprüngen teilweise reflektierten Impulse nicht verstärkt werden. Dies wird dadurch erreicht, daß die Querschnittssprünge nicht in gleichen Abständen längs des Bohrwerkzeuges vorgesehen sind. Die Stege 8, 9 haben über die Länge des Bohrwerkzeuges unterschieldlichen, im Ausführungsbispiel jeweils zunehmenden Abstand in Richtung auf das Einspannende 6. Dadurch wird zuverlässig verhindert, daß die an dem Querschnittssprüngen, die durch die Stege 8, 9 gebildet werden, teilweise reflektierten Impulse die Querschwingungen verstärken. Dadurch wird eine erhebliche Schallreduzierung erzielt. Auch werden Resonanzerscheinungen zwischen den Querschwingungen und den teilweise reflektierten Impulsen sicher verhindert. Infolge der geringen Wandreibung und des raschen Bohrmehlabtransportes vom Bohrkopf 1 wird gleichzeitig eine sehr hohe Borhleistung erzielt.

Die Abfuhrnuten 4, 5 haben über ihre Länge unterschiedliche Querschnittsform (Fig. 2), so daß die Abfuhrnuten hinsichtlich der Aufnahmefähigkeit für das Bohrmehl entsprechend den jeweiligen Erfordernissen gestaltet werden können. Die Abfuhrnuten 4, 5 haben im Bereich des Bohrkopfes 1 im wesentlichen rechteckigen Querschnitt (Fig. 2). Dadurch wird trotz der geringen Steigung der Abfuhrnuten 4, 5 im Bohrkopfbereich ein großes Aufnahmevolumen für das Bohrmehl geschaffen. Infolge der annähernd rechteckigen Querschnittsform haben die Abfuhrnuten 4, 5 an die jeweilige Rückenfläche 11, 12 der Stege 8, 9 rechtwinklig anschließende Tragflächen 14, 15, die mit verhältnismäßig großem Krümmungsradius in den achsparallel verlaufenden Boden 16, 17 der Abfuhrnuten 4, 5 übergehen. Auf den verhältnismäßig breiten Tragflächen 14, 15 kann das anfallende Bohrmehl zuverlässig in den Abfuhrnuten in Richtung auf das Einspannende 6 gefördert werden. Der Boden 16, 17 geht bogenförmig gekrümmt in eine den Tragflächen 14, 15 gegenüberliegende und bis zur Rückenfläche 11, 12 verlaufende Seitenwand 18, 19 über.

In dem Maße, in dem die Abfuhrnuten 4, 5 axial breiter werden bzw. steiler verlaufen, werden die Tragflächen 14, 15 schmaler, bis sie im mittleren Bereich des Bohrwerkzeuges gekrümmt an die Rückenflächen 11, 12 der Stege 8, 9 anschließen. In diesen Bereichen ist die Aufnahmefähigkeit für das Bohrmehl durch die zunehmende axiale Breite 13 der Abfuhrnuten ohnehin groß, so daß eine rechteckige oder annähernd rechteckige Querschnittsform der Abfuhrnuten nicht erforderlich ist. Selbstverständlich kann aber die annähernd rechteckige Querschnittsform der Abfuhrnuten uberderen ganze Länge beibehalten werden. Das in den großen Aufnahmeräumen im Bereich des Bohrkopfes 1 geförderte Bohrmehl wird auf jeden Fall zuverlässig von den entsprechend breiten Bereichen der Abfuhrnuten 4, 5 weiter gefördert. Da im engen Wendelbereich der Abfuhrnuten 4, 5 nahe am Bohrkopf 1 die annähernd rechteckige Querschnittsform vorgesehen ist, wird das Bohrmehl, selbst wenn es in großen Mengen anfällt, ohne Stau über die gesamte Bohrtiefe und ohne Verklemmen des Bohrwerkzeuges aus dem Bohrloch in den Abfuhrnuten 4, 5 herausgefördert. Auf den Tragflächen 14, 15 wird eine verhältnismäßig große Bohrmehlmenge gelagert und längs der Abfuhrnuten gefördert.

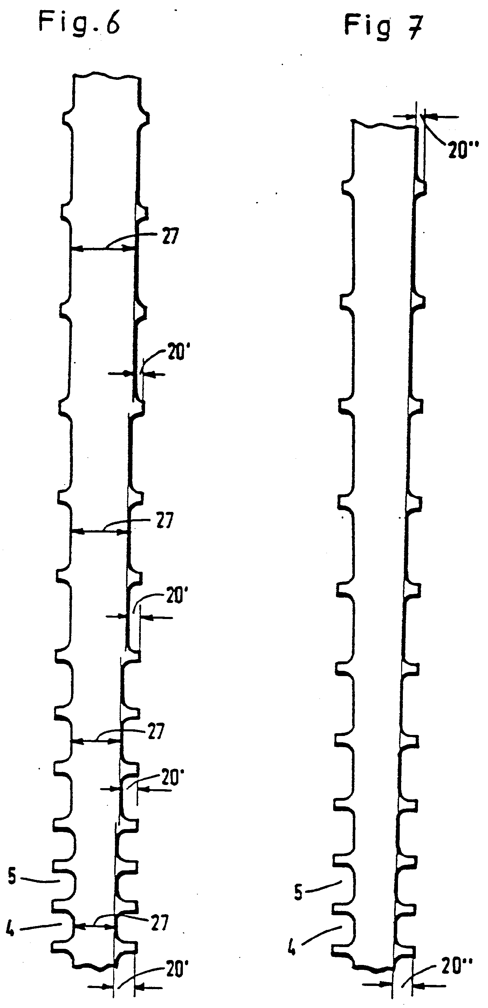

Da infolge der zunehmenden Steigung die axiale Breite 13 der Abfuhrnuten 4, 5 in Richtung auf das Einspannende 6 zunimmt, kann die Tiefe 20" der Abfuhrnuten 4, 5 in Richtung auf das Einspannende 6 abnehemen (Fig. 6), wobei der Kerndurchmesser 27 des Schaftteiles stufenweise zunimmt. Die Tiefe 20" der Abfuhrnuten nimmt vorzugsweise in dem Maße ab, wie die Steigung der Abfuhrnuten zunimmt (Fig. 7). Dadurch wird ohne Beeinträchtigung des Bohrmehlabtransportes die Festigkeit des Bohrwerkzeuges erhöht. Vorzugsweise nimmt die Tiefe 20" der Abfuhrnuten 4, 5 stetig ab, so daß eine etwa gleichmäßige Querschnittszunahme des Bohrwerkzeuges im Bereich der Abfuhrnuten erreicht wird.

Beim dargestellten Ausführungsbeispiel nimmt die Steigung derAbfuhrnuten 4, vom Bohrkopf 1 bis zum Einspannende 6 zu. Das Bohrwerkzeug kann aber auch so ausgebildet werden, daß die Steigung der Abfuhrnuten vom Bohrkopf aus zunächst zunimmt, vorzugsweise stetig zunimmt, und dann mit Abstand vom Bohrkopf bis zum Einsteck- bzw. Einspannende konstant bleibt. Fig. 4 zeigt eine solche Ausführungsform. Vom Bohrkopf 1" ausgehend nimmt die Steigung über eine axiale Länge 21 vorzugsweise stetig zu, d.h. der Steigungswinkel a nimmt in diesem Bereich von einem Wert a₁ am Bohrkopf bis zu einem Wert an am Ende des Bereiches 21 zu. Anschließend bleibt die Steigung der Abfuhrnuten 4", 5" bis zum Einsteck-bzw. Einspannende konstant. Innerhalb des Bereiches 21 kann die Steigung der Abfuhrnuten 4", 5" auch ungleichmäßig oder abschnittsweise zunehmen.

Bei sämtlichen Ausführungsformen des Bohrwerkzeuges wird die Energie des Schlagimpulses so verteilt, daß es eine höhere Zerspanenergie bei Abnahme der Schallenergie bekommt. Dadurch wird eine erhebliche Schallreduzierung bei bis zu 65 % besserer Bohrleistung erzielt im Vergleich zu den herkömmlichen Bohrwerkzeugen. Sie können anstelle der beschriebenen zwei Abfuhrnuten auch nur eine einzige Abfuhrnut haben. Ein weiterer wesentlicher Vorteil bei sämtlichen Ausführungsformen besteht darin, daß insbesondere der mittlere Teil des Bohrwerkzeuges, der beim Bohren besonders kritisch ist, ein hohe Biegesteifigkeit hat, da die Abfuhrnuten in diesem Bereich größere Steigung haben als im Bereich des Bohrkopfes. Infolge der großen Steigung der Abfuhrnuten verteilt sich die Querschnittsschwächung des Bohrwerkzeuges durch die Abfuhrnuten über eine größere axiale Länge, wodurch die vorteilhafte hohe Biegesteifigkeit erreicht wird.

Der Steigungswinkel a der Abfuhrnuten im Bereich des Bohrkopfes liegt vorzugsweise zwischen etwa 15° und 25°. Der größte Steigungswinkel a und damit die größte Steigung der Abfuhrnuten liegt bei mindestens etwa 60°

## Patentansprüche

1. Bohrwerkzeug zum Einsatz in axial schlagenden Antriebsmaschinen zum Bohren in Gestein, Beton und dergleichen, mit einem Bohrkopf (1), mit einem daran anschließenden Schaftteil (3), mit einem Einsteck- bzw. Einspannteil (6) zur Verbindung mit einer Antriebsvorrichtung und mit wenigstens einer wendelförmigen Abfuhrnut, die sich vom Bohrkopf aus bis zum Einspannteil (6) erstreckt, wobei die Steigung (Steigungswinkel a) der Abfuhrnut vom Bohrkopf ausgehend in Richtung Einsteck- bzw. Einspannteil (6) hin zunimmt, dadurch gekennzeichnet, daß die Steigung (Steigungswinkel a, aᵢ) sowie die axiale Breite (13) der Abfuhrnut (4, 5) vom Bohrkopf (1) bis zum Einspannende (6) hin zunimmt, wobei vom Bohrkopf (1) beginnend eine gleichbleibende oder in Richtung auf das Einspannende (6) abnehmende radiale Tiefe (20) der Abfuhrnut (4,5) vorgesehen ist.

2. Bohrwerkzeug nach Anspruch 1, dadurch gekennzeichnet, daß die Steigung der Abfuhrnut (4, 5) vom Bohrkopf (1) aus bis zum Einspannteil (6) stetig zunimmt. (Fig. 1)

3. Bohrwerkzeug nach einem derAnsprüche 1 oder 2, dadurch gekennzeichnet, daß die Steigung der Abfuhrnuten (4', 5';) vom Bohrkopf (1) aus in Richtung auf das Einspannende (6) abschnittsweise zunimmt. (Fig. 3)

4. Bohrwerkzeug nach Anspruch 1, dadurch gekennzeichnet, daß die Steigung der Abfuhrnut (4"; 5") vom Bohrkopf (1") aus zunächst zunimmt und dann bis zum Einspannende (6) konstant bleibt. (Fig. 4)

5. Bohrwerkzeug nach einem der Ansprüche 1 bis 4, dadurch gekennzeichnet, daß die Abfuhrnut (4, 5) über ihre Länge eine unterschiedliche Querschnittsform aufweist, wobei der Querschnitt im Bereich des Bohrkopfes (1) rechteckförmig tief und im Bereich des Einspannendes (6) oval flach ausgebildet ist.

6. Bohrwerkzeug nach einem der Ansprüche 1 bis 5, dadurch gekennzeichnet, daß die radiale Tiefe (20, 20', 20") der Abfuhrnut (4, 5) vom Bohrkopf (1) aus in Richtung auf das Einspannende (6) stetig abnimmt.

7. Bohrwerkzeug nach einem der Ansprüche 1 bis 6, dadurch gekennzeichnet, daß der Steigungswinkel (a) der Abfuhrnut (4, 5) im Bereich des Bohrkopfes (1) zwischen 15° und 25° und im Bereich des Einspannendes ca. 60° beträgt (Fig. 1).

## Claims

1. Drilling tool for use in driving machines having axial percussion for drilling in stone, concrete and the like, with a drill head (1), with an adjoining shank part (3), with an insertion or chucking part (6) for connection to a driving device and with at least one helical discharge groove, which extends from the drill head as far as the chucking part (6), the pitch (pitch angle a) of the discharge groove, starting from the drill head, increasing in the direction of the insertion or chucking part (6), characterised in that the pitch (pitch angle a , aᵢ) as well as the axial width (13) of the discharge groove (4, 5) increases from the drill head (1) towards the chucking end (6), whereby beginning from the drill head (1), a constant radial depth (20) of the discharge groove (4, 5), or a radial depth decreasing in the direction of the chucking end (6) being provided.

2. Drilling tool according to Claim 1, characterised in that the pitch of the discharge groove (4, 5) increases continuously from the drill head (1) towards the chucking part (6). (Fig. 1)

3. Drilling tool according to one of Claims 1 or 2, characterised in that the pitch of the discharge grooves (4', 5';) increases in sections from the drill head (1) in the direction of the chucking end (6). (Fig. 3)

4. Drilling tool according to Claim 1, characterised in that the pitch of the discharge groove (4"; 5") first of all increases from the drill head (1") and then remains constant as far as the chucking end (6). (Fig. 4)

5. Drilling tool according to one of Claims 1 to 4, characterised in that the discharge groove (4, 5) has a different cross-sectional shape over its length, the cross-section in the region of the drill head (1) being constructed to be deep and of rectangular shape and in the region of the chucking end (6) having an oval flat construction.

6. Drilling tool according to one of Claims 1 to 5, characterised in that the radial depth (20, 20', 20") of the discharge groove (4, 5) decreases continuously from the drill head (1) in the direction of the chucking end (6).

7. Drilling tool according to one of Claims 1 to 6, characterised in that the pitch angle (a) of the discharge groove (4, 5) in the region of the drill head (1) amounts to between 15 and 25° and in the region of the chucking end to approximately 60° (Figure 1).

## Revendications

1. Outil de forage qui, destiné à être utilisé dans des machines motrices à percussion axiale pour forer dans de la roche, du béton et analogue, comprend une tête de forage (1), une partie formant fût (3) faisant suite à cette dernière, une partie de montage ou de serrage (6) destinée à le relier à un dispositif d'entraînement, et présente au moins une rainure d'évacuation hélicoïdale qui s'étend à partir de la tête de forage jusqu'à la partie de serrage (6), la pente (angle d'inclinaison a) de la rainure d'évacuation augmentant à partir de la tête de forage en direction de la partie de montage ou de serrage (6), caractérisé en ce que la pente (angle d'inclinaison a, aᵢ) ainsi que la largeur axiale (13) de la rainure d'évacuation (4,5) augmentent à partir de la tête de forage (1) jusqu'à l'extrémité de serrage (6), en sorte qu'à partir de la tête de forage (1) est prévue une profondeur radiale (20) de la rainure de guidage (4,5) qui reste constante ou qui diminue en direction de l'extrémité de serrage (6).

2. Outil de forage selon la revendication 1, caractérisé en ce que la pente de la rainure d'évacuation (4,5) augmente uniformément à partir de la tête de forage (1) jusqu'à la partie de serrage (6)(figure 1).

3. Outil de forage selon l'une quelconque des revendications 1 et 2, caractérisé en ce que la pente des rainures d'évacuation (4',5') augmente à partir de la tête de forage (1) en direction de l'extrémité de serrage (6) de manière échelonnée (figure 3).

4. Outil de forage selon la revendication 1, caractérisé en ce que la pente de la rainure d'évacuation (4";5") augmente d'abord à partir de la tête de forage (1") et reste ensuite constante jusqu'à l'extrémité de serrage (6)(figure 4).

5. Outil de forage selon l'une quelconque des revendications 1 à 4, caractérisé en ce que la rainure d'évacuation (4,5) présente sur sa longueur une forme de section variée, la section transversale étant rectangulaire et profonde au niveau de la tête de forage (1) et étant ovale et peu profonde au niveau de l'extrémité de serrage (6).

6. Outil de forage selon l'une quelconque des revendications 1 à 5, caractérisé en ce que la profondeur radiale (20,20',20") de la rainure d'évacuation (4,5) diminue uniformément à partir de la tête de forage (1) en direction de l'extrémité de serrage (6).

7. Outil de forage selon l'une quelconque des revendications 1 à 6, caractérisé en ce que l'angle d'inclinaison (a) de la rainure d'évacuation (4,5) est compris entre 15° et 25° au niveau de la tête de forage (1) et est d'environ 60° au niveau de l'extrémité de serrage (figure 1).
